# EUROPÄISCHE PATENTANMELDUNG

(11) **EP 1 870 833 A2**
(43) Veröffentlichungstag der Anmeldung: **26.12.2007**
(21) Anmeldenummer: 07011936.7
(22) Anmeldetag: 19.06.2007
(51) Int. Cl.: G06K 7/00

(54) **Verfahren, Transponder und System zur schnellen Datenübertragung**

(30) Priorität: 23.06.2006 DE 102006030768
(71) Anmelder: ATMEL Germany GmbH, 74072 Heilbronn (DE)
(72) Erfinder: Friedrich, Ulrich, 74248 Ellhofen (DE); Masuch, Jens, 74081 Heilbronn (DE); Ziebertz, Dirk, 74246 Eberstadt (DE); Pangels, Michael, 71642 Ludwigsburg (DE); Fischer, Martin, 74629 Pfedelbach (DE)
(74) Vertreter: Patentanwälte Ruff, Wilhelm, Beier, Dauster & Partner

(57) **Zusammenfassung**

Die Erfindung betrifft Verfahren zur drahtlosen Datenübertragung zwischen einer Basisstation (B) und einem Transponder (T), wobei ein Telegramm, umfassend mindestens ein Kommando (K) und eine Datensequenz (D), von der Basisstation (B) gesendet wird, das Telegramm durch den Transponder (T) empfangen und ausgewertet wird, in dem Transponder (T) nach einem Empfang des Kommandos (K) und vor einem vollständigen Empfang des Telegramms mindestens ein Schlüssel bereitgestellt und der Schlüssel an die Basisstation (B) übertragen wird, der Schlüssel durch die Basisstation (B) detektiert wird und noch zu sendende Teile des Telegramms und/oder nachfolgende Telegramme durch die Basisstation (B) mit dem Schlüssel kodiert werden.

## Beschreibung

Die Erfindung betrifft ein Verfahren zur drahtlosen Datenübertragung zwischen einer Basisstation und einem Transponder, wobei ein Telegramm, umfassend mindestens ein Kommando und eine Datensequenz, von der Basisstation gesendet wird und das Telegramm durch den Transponder empfangen und ausgewertet wird. Die Erfindung betrifft weiter einen Transponder und ein System zur schnellen Datenübertragung.

Verfahren zur drahtlosen Datenübertragung finden beispielsweise bei kontaktlosen Identifikationssystemen oder so genannten Radio-Frequency-Identification (RFID)-Systemen Verwendung. Ein derartiges System besteht üblicherweise aus einer Basisstation bzw. einem Lesegerät oder einer Leseeinheit und einer Vielzahl von Transpondern oder Remote-Sensoren, die sich gleichzeitig im Ansprechbereich der Basisstation befinden. Die Transponder bzw. deren Sende- und Empfangseinrichtungen verfügen üblicherweise nicht über einen aktiven Sender für die Datenübertragung zur Basisstation. Derartige nicht aktive Systeme werden als passive Systeme bezeichnet, wenn sie keine eigene Energieversorgung aufweisen, und als semipassive Systeme bezeichnet, wenn sie eine eigene Energieversorgung aufweisen. Passive Transponder entnehmen die zu ihrer Versorgung benötigte Energie dem von der Basisstation emittierten elektromagnetischen Feld.

Zur Datenübertragung von einem Transponder zur Basisstation mit UHF oder Mikrowellen im Fernfeld der Basisstation wird in der Regel die so genannte Backscatter- oder Rückstreukopplung eingesetzt. Hierzu werden von der Basisstation elektromagnetische Trägerwellen emittiert, die durch die Sende- und Empfangseinrichtung des Transponders entsprechend den an die Basisstation zu übertragenden Daten mit einem Modulationsverfahren moduliert und reflektiert werden. Die typischen Modulationsverfahren hierfür sind die Amplitudenmodulation, die Phasenmodulation und die Amplitude-Shift-Keying (ASK)-Unterträgermodulation, bei der die Frequenz oder die Phasenlage des Unterträgers geändert wird.

Bei einer Datenübertragung zwischen einer Basisstation und einem Transponder soll aus Sicherheits- und/oder Datenschutzgründen verhindert werden, dass Dritte die übertragenen Daten abhören können. Der Transponder überträgt die Daten an die Basisstation mit einem geringen RF-Pegel. Ein Abhören ist daher nur mit einem erhöhten Aufwand möglich. Die Basisstation sendet dagegen im Regelfall mit einem hohen RF-Pegel, so dass ein Abhören der übertragenen Daten auch aus großen Entfernungen möglich ist.

Um die Sicherheit der Datenübertragung zu erhöhen, ist es allgemein bekannt, die übertragenen Daten durch kryptografische Verfahren zu verschlüsseln. Grundlage dieser kryptografischen Verfahren sind zumeist Zufallszahlen, die zwischen Transponder und Basisstation ausgetauscht werden müssen. So ist beispielsweise in dem Normungsvorschlag ISO/IEC_CD 18000-SC vom 07.01.2005 vorgesehen, dass einem Schreibzugriff durch eine Basisstation auf einen Transponder eine Anforderung einer Zufallszahl vorhergeht. Der Transponder sendet aufgrund der Anforderung eine Zufallszahl an die Basisstation, mit welcher die Basisstation die Daten für den nachfolgenden Schreibzugriff verschlüsselt. Auch für eine Übertragung eines Zugangspassworts, eines Sperrbefehls oder für andere Übertragungen sind vor einer Übertragung der Daten Zufallszahlen für deren Verschlüsselung auszutauschen.

Ein derartiger Austausch im Vorfeld ist mit einem erheblichen Zeitaufwand verbunden.

Der Erfindung liegt die Aufgabe zugrunde, ein Verfahren, einen Transponder und ein System zur Datenübertragung zur Verfügung zu stellen, die eine schnelle Übertragung sicherheitsrelevanter Daten ermöglichen.

Diese Aufgabe wird gelöst durch die Gegenstände mit den Merkmalen der Ansprüche 1, 11 und 12. Weitere vorteilhafte Ausgestaltungen ergeben sich aus den Unteransprüchen.

Bei dem erfindungsgemäßen Verfahren zur drahtlosen Datenübertragung zwischen einer Basisstation und einem Transponder, insbesondere einem passiven oder passiven, rückstreubasierten Transponder, wird ein Telegramm, umfassend mindestens ein Kommando und eine Datensequenz, von der Basisstation gesendet und das Telegramm durch den Transponder empfangen und ausgewertet. In dem Transponder wird nach einem Empfang des Kommandos und vor einem vollständigen Empfang des Telegramms mindestens ein Schlüssel bereitgestellt und der Schlüssel an die Basisstation übertragen. Der Schlüssel wird durch die Basisstation detektiert und noch zu sendende Teile des Telegramms, insbesondere die Datensequenz und/oder Teile der Datensequenz, und/oder nachfolgende Telegramme werden durch die Basisstation mit dem Schlüssel kodiert.

Als Telegramm wird dabei eine Signalfolge bezeichnet, welche mindestens ein Kommando und eine Datensequenz umfasst. In dem genannten Normungsvorschlag sind beispielsweise Telegramme für einen allgemeinen Zugang (access), einen Schreibzugriff (write) oder einen Sperrzugriff (lock) vorgesehen. Die Telegramme umfassen zumindest teilweise neben dem Kommando, durch welches eine Zugriffsart definiert wird, und den Datensequenzen, die an den Transponder (das Tag) übertragen werden sollen, weitere Kontrollbits oder ähnliches. Das Kommando ist üblicherweise eine Sequenz von 8 Bits. Es sind jedoch auch Ausführungsformen denkbar, in welchen als Kommando ein einzelnes Signalbit verwendet wird. Für eine Übertragung des Telegramms wird zunächst das Kommando übertragen.

Durch die erfindungsgemäße Übertragung eines Schlüssels nach Empfang des Kommandos kann die Datensequenz des Telegramms zumindest teilweise verschlüsselt werden, ohne dass dem Telegramm ein Schlüsselaustausch vorhergeht. Die von der Basisstation übertragenen Daten können dabei "on the fly", d.h. ohne Zwischenspeichern des Schlüssels bei der Basisstation, verschlüsselt werden.

In Ausgestaltung der Erfindung ist der Transponder ein rückstreubasierter Transponder, wobei ein von dem Transponder reflektiertes Signal unter Verwendung einer Phasenmodulation, insbesondere einer Phasenumtastung, moduliert wird. Ein derartiges Modulationsverfahren ist einfach zu implementieren. Die Datenübertragung zwischen Basisstation und Transponder erfolgt vorzugsweise im Vollduplex-Betrieb, wobei die Datenübertragung von einem Transponder in Richtung Basisstation zeitgleich mit der Datenübertragung von der Basisstation zum Transponder stattfindet.

In weiterer Ausgestaltung der Erfindung wird das von dem Transponder reflektierte Signal im Zeitbereich kodiert, insbesondere durch eine 3phase1-Kodierung. Bestimmte Kodierungsverfahren sind beispielsweise in dem RFID/EPC-Standard festgelegt und beschrieben.

In einer anderen Ausgestaltung der Erfindung wird das von dem Transponder reflektierte Signal im Frequenzbereich kodiert, insbesondere durch eine T1.5T-Kodierung, eine T2T-Kodierung oder eine F2F-Kodierung. Bei einer T1.5T-Kodierung wird die Zeit T einer Primitivperiode mit dem Faktor 1.5 "kodiert". Eine logische "0" wird dadurch zu "T" eine logische "1" zu "1.5T". Anstelle der genannten Faktoren 1.5 und 2 sind andere Faktoren denkbar. Die Primitivperiode "T" ist durch ein Signal- und/oder Kommandobit und/oder einen Standard festlegbar. Analog kann anstelle der Zeit T der Primitivperiode die Frequenz F "kodiert" werden.

In einer weiteren Ausgestaltung der Erfindung wird durch die Basisstation eine zur Kodierung dienende Frequenz des von dem Transponder reflektierten Signals durch eine lineare Prädiktion erkannt. Dadurch ist ein schnelles Erkennen der Frequenz des reflektierten Signals möglich, und damit eine schnelle Detektion des vom Transponder übertragenen Signals. In einer Ausführungsform wird die Übertragung des Signals nach Aussenden eines sogenannten "notches", d.h. nach Einbruch eines Trägersignals, gestartet. "Notches" dienen dabei einer Synchronisation der Datenübertragung.

In einer anderen Ausgestaltung der Erfindung wird durch die Basisstation eine zur Kodierung dienende Frequenz des von dem Transponder reflektierten Signals durch einen Korrelator-Ansatz erkannt. Dadurch ist ebenfalls ein schnelles Erkennen der Frequenz des reflektierten Signals möglich.

In einer weiteren Ausgestaltung wird als Schlüssel eine Zufallszahl oder eine Zufallszahlenfolge generiert und an dem Transponder bereitgestellt. Zufallszahlen ermöglichen ein simples und einfach zu implementierendes kryptografisches Verfahren.

In Weiterbildung der Erfindung wird die Zufallszahl unter Verwendung eines Zufallszahlengenerators, insbesondere eines linearen rückgekoppelten Schieberegisters, generiert. Ein derartiges Verfahren ermöglicht eine einfache Generierung von Zufallszahlen.

In einer anderen Ausgestaltung wird die Zufallszahl oder die Zufallszahlenfolge unter Verwendung eines analogen Rauschgenerators generiert. Dem analogen Rauschgenerator kann beispielsweise ein Schmitt-Trigger nachgeschaltet werden, so dass ein chaotischer digitaler Strom erzeugt wird. Als Basisschaltung für analoge Schaltungen können stark rauschende Verstärker oder chaotische Oszillatoren verwendet werden.

In einer anderen Ausführungsform wird eine Schlüsselfolge durch einen Schlüsselstromgenerator und/oder als Ergebnis aus einem Authentifizierungsprozess generiert.

Die Aufgabe wird weiter gelöst durch einen Transponder, insbesondere einen passiven oder passiven, rückstreubasierten Transponder, für eine drahtlose Datenübertragung von und zu einer Basisstation, wobei ein von der Basisstation gesendetes Telegramm, umfassend mindestens ein Kommando und eine Datensequenz, von dem Transponder empfangbar und auswertbar ist, nach einem Empfang des Kommandos und vor einem vollständigen Empfang des Telegramms durch den Transponder mindestens ein Schlüssel bereitstellbar und an die Basisstation übertragbar ist und anschließend empfangene Teile des Telegramms durch den Transponder mit dem Schlüssel dekodierbar sind. An dem Transponder sind geeignete Mittel vorgesehen, durch welche der Schlüssel bereitstellbar und/oder übertragbar ist. Die Übertragung erfolgt vorzugsweise durch rückstreuen des empfangenen Signals, wobei das Signal für ein Rückstreuen durch geeignete Mittel des Transponders im Zeitbereich kodiert ist.

Die Aufgabe wird außerdem gelöst durch ein System für eine drahtlose Datenübertragung, umfassend mindestens einen Transponder, insbesondere einen passiven oder passiven, rückstreubasierten Transponder, und mindestens eine Basisstation, wobei ein Telegramm, umfassend mindestens ein Kommando und eine Datensequenz, von der Basisstation an den Transponder übertragbar und durch den Transponder empfangbar und auswertbar ist, nach einem Empfang des Kommandos und vor einem vollständigen Empfang des Telegramms durch den Transponder mindestens ein Schlüssel bereitstellbar und an eine Basisstation übertragbar ist, durch die Basisstation der übertragene Schlüssel erkennbar und noch zu sendende Teile des Telegramms mit dem Schlüssel kodierbar sind und kodiert empfangene Teile des Telegramms durch den Transponder dekodierbar sind.

Weitere Vorteile der Erfindung ergeben sich aus der nachfolgenden Beschreibung von Ausführungsbeispielen der Erfindung, die in den Zeichnungen dargestellt sind. Für gleiche Bauteile werden dabei einheitliche Bezugszeichen verwendet.

In den Zeichnungen zeigen:
- Fig. 1: eine erfindungsgemäßes Verfahren zur schnellen und sicheren Datenübertragung,
- Fig. 2: ein zweites Ausführungsbeispiel eines erfindungsgemäßen Verfahrens zur schnellen und sicheren Datenübertragung, und
- Fig. 3: eine schematische Darstellung eines Systems zur schnellen und sicheren Datenübertragung.

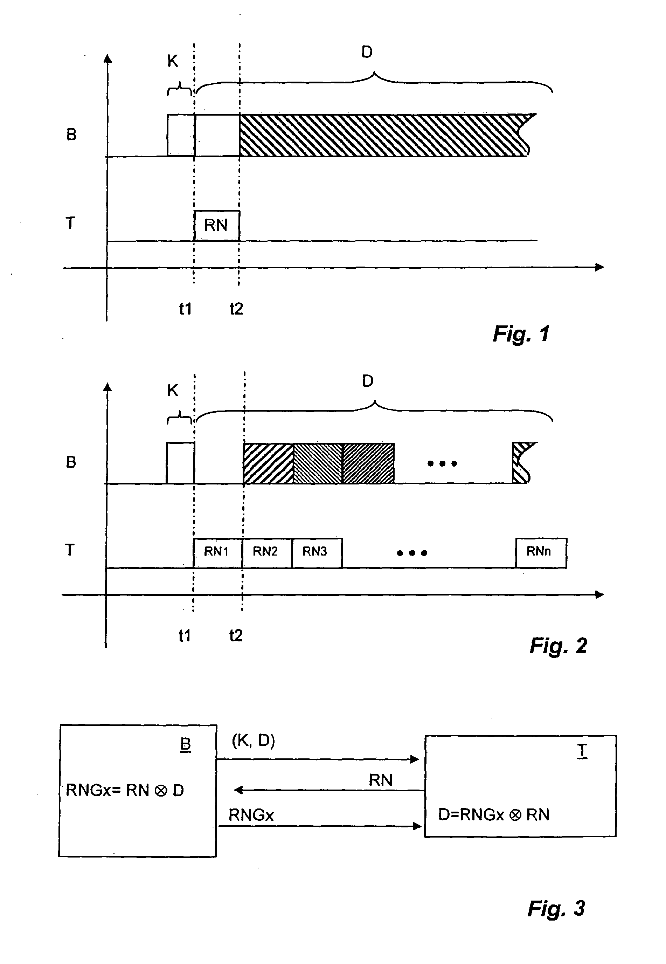

Fig. 1 zeigt schematisch einen Ablauf des erfindungsgemäßen Verfahrens zur schnellen und sicheren Übertragung von Daten. Bei dem Verfahren wird ein Telegramm umfassend ein Kommando K und eine Datensequenz D von einer Basisstation B gesendet. Das Telegramm wird durch einen Transponder T empfangen und ausgewertet. Erfindungsgemäß wird durch den Transponder T nach einem Empfang des Kommandos K zum Zeitpunkt t1 und vor einem Empfang der Datensequenz D ein Schlüssel bereitgestellt. In der dargestellten Ausführungsform handelt es sich bei dem Schlüssel um eine Zufallszahl RN. Die Zufallszahl RN wird an die Basisstation B übertragen. Die Übertragung erfolgt durch Rückstreuen des empfangenen Signals. Der Transponder T und die Basisstation B werden dabei zumindest vorübergehend im Vollduplex-Betrieb betrieben. Die Basisstation B erkennt zum Zeitpunkt t2 die Zufallszahl RN und noch zu sendende Teile der Datensequenz D werden mit der Zufallszahl RN verschlüsselt. Die Verschlüsselung erfolgt beispielsweise durch eine logische Verknüpfung XOR.

Fig. 2 zeigt schematisch einen Ablauf eines modifizierten erfindungsgemäßen Verfahrens zur schnellen und sicheren Übertragung von Daten. Bei dem Verfahren wird ebenfalls ein Telegramm umfassend ein Kommando K und eine Datensequenz D von der Basisstation B gesendet. Das Telegramm wird durch einen Transponder T empfangen und ausgewertet. Gemäß dem zweiten Ausführungsbeispiel wird durch den Transponder T nach einem Empfang des Kommandos K zum Zeitpunkt t1 und vor einem Empfang der Datensequenz D eine Schlüsselfolge bereitgestellt. In der dargestellten Ausführungsform handelt es sich bei der Schlüsselfolge um eine Zufallszahlenfolge RN1 .... RNn. Die Zufallszahlenfolge RN1 .... RNn wird an die Basisstation B übertragen. Die Übertragung von dem Transponder T an die Basisstation erfolgt durch Rückstreuen des empfangenen Signals. Der Transponder T und die Basisstation B werden dabei zumindest vorübergehend im Vollduplex-Betrieb betrieben. Die Basisstation B erkennt zum Zeitpunkt t2 die Zufallszahlenfolge RN1 .... RNn und noch zu sendende Teile der Datensequenz D werden mit der Zufallszahlenfolge RN1 .... RNn verschlüsselt. Die Verschlüsselung erfolgt vorzugsweise ebenfalls durch eine logische Verknüpfung, insbesondere eine XOR-Verknüpfung.

Fig. 3 zeigt schematisch ein System zur drahtlosen Datenübertragung umfassend eine Basisstation B und einen Transponder T. Die Basisstation B sendet ein Telegramm an den Transponder T. Das Telegramm umfasst beispielsweise wie in Fig. 1 und 2 dargestellt ein Kommando K und eine Datensequenz D. Das Telegramm ist durch geeignete, nicht dargestellte Mittel an dem Transponder empfangbar und auswertbar. Nach einem Empfang des Kommandos und vor einem vollständigen Empfang des Telegramms ist durch ein ebenfalls nicht dargestelltes, geeignetes Mittel an dem Transponder T eine Zufallszahl RN generierbar und an die Basisstation B übertragbar. Die Basisstation B erkennt die Zufallszahl RN. Dadurch sind noch zu sendende Teile des Telegramms mit der Zufallszahl RN kodierbar. Die kodierten Teile des Telegramms RNGx werden an den Transponder T übertragen und sind durch den Transponder T decodierbar. In einer anderen Ausführungsform wird anstelle der Zufallszahl RN eine Zufallszahlenfolge generiert und übertragen.

Der Transponder T ist einem nicht dargestellten Produkt, wie beispielsweise einem Fahrzeug zugeordnet. Auf dem Transponder sind dabei in einem nicht flüchtigen Speicherbereich Informationen über das Fahrzeug ablegbar, welche durch andere, berechtigte Basisstationen zu einer gegebenen Zeit und/oder an einem gegebenen Ort auslesbar sein sollen. Hierzu zählen beispielsweise Motordaten, Daten für bestimmte Steuergeräte und andere. Diese Daten sollen aus Datenschutz- und/oder Sicherheitsgründen für unberechtigte Dritte jedoch zumindest teilweise nicht verfügbar sein. Zudem kann in bestimmten Anwendungen und/oder RFID-Systemen vorgesehen sein, dass einem Lese- und/oder Schreibzugriff eine Übertragung eines (symmetrischen) Passworts vorausgeht. Um zu verhindern, dass ein unberechtigter Dritter die sicherheitsrelevanten Daten und/oder das Passwort beim Aufspielen und/oder Übertragen an den Transponder abhören kann, werden die Daten bei einer Übertragung von der Basisstation an den Transponder verschlüsselt.

## Patentansprüche

1. Verfahren zur drahtlosen Datenübertragung zwischen einer Basisstation (B) und einem passiven, rückstreubasierten Transponder (T), wobei ein Telegramm, umfassend mindestens ein Kommando (K) und eine Datensequenz (D), von der Basisstation (B) gesendet wird und das Telegramm durch den Transponder (T) empfangen und ausgewertet wird,
**dadurch gekennzeichnet, dass**
- in dem Transponder (T) nach einem Empfang des Kommandos (K) und vor einem vollständigen Empfang des Telegramms mindestens ein Schlüssel bereitgestellt und der Schlüssel an die Basisstation (B) übertragen wird,
- der Schlüssel durch die Basisstation (B) detektiert wird und
- noch zu sendende Teile des Telegramms und/oder nachfolgende Telegramme durch die Basisstation (B) mit dem Schlüssel kodiert werden.

2. Verfahren nach Anspruch 1, **dadurch gekennzeichnet, dass** ein von dem Transponder (T) reflektiertes Signal unter Verwendung einer Phasenmodulation, insbesondere einer Phasenumtastung, moduliert wird.

3. Verfahren nach Anspruch 2, **dadurch gekennzeichnet, dass** das von dem Transponder (T) reflektierte Signal im Zeitbereich kodiert wird, insbesondere durch eine 3phase1-Kodierung.

4. Verfahren nach Anspruch 2, **dadurch gekennzeichnet, dass** das von dem Transponder (T) reflektierte Signal im Frequenzbereich kodiert wird, insbesondere durch eine T1.5T-Kodierung, eine T2T-Kodierung oder eine F2F-Kodierung.

5. Verfahren nach Anspruch 4, **dadurch gekennzeichnet, dass** durch die Basisstation (B) eine zur Kodierung dienende Frequenz des von dem Transponder (T) reflektierten Signals durch eine lineare Prädiktion erkannt wird.

6. Verfahren nach Anspruch 4, **dadurch gekennzeichnet, dass** durch die Basisstation (B) eine zur Kodierung dienende Frequenz des von dem Transponder (T) reflektierten Signals durch einen Korrelator-Ansatz erkannt wird.

7. Verfahren nach einem der vorhergehenden Ansprüche, **dadurch gekennzeichnet, dass** als Schlüssel eine Zufallszahl (RN) oder eine Zufallszahlenfolge (RN1...RNn) generiert wird.

8. Verfahren nach Anspruch 7, **dadurch gekennzeichnet, dass** die Zufallszahl (RN) oder die Zufallszahlenfolge (RN1...RNn) unter Verwendung eines Zufallszahlengenerators, insbesondere eines linearen rückgekoppelten Schieberegisters, generiert wird.

9. Verfahren nach Anspruch 7 oder 8, **dadurch gekennzeichnet, dass** die Zufallszahl (RN) oder die Zufallszahlenfolge (RN1...RNn) unter Verwendung eines analogen Rauschgenerators generiert wird.

10. Verfahren nach einem der Ansprüche 1 bis 6, **dadurch gekennzeichnet, dass** eine Schlüsselfolge durch einen Schlüsselstromgenerator und/oder als Ergebnis aus einem Authentifizierungsprozess generiert wird.

11. Transponder, insbesondere passiver und/oder rückstreubasierter Transponder (T), für eine drahtlose Datenübertragung von und zu einer Basisstation (B), wobei ein von der Basisstation (B) gesendetes Telegramm, umfassend mindestens ein Kommando (K) und eine Datensequenz (D), von dem Transponder (T) empfangbar und auswertbar ist,
**dadurch gekennzeichnet, dass**
nach einem Empfang des Kommandos (K) und vor einem vollständigen Empfang des Telegramms durch den Transponder (T) mindestens ein Schlüssel bereitstellbar und an die Basisstation (B) übertragbar ist und anschließend empfangene Teile des Telegramms und/oder nachfolgende Telegramme durch den Transponder (T) mit dem Schlüssel dekodierbar sind.

12. System für eine drahtlose Datenübertragung, umfassend einen Transponder (T), insbesondere einen passiven und/oder rückstreubasierten Transponder (T), und eine Basisstation (B), wobei ein Telegramm, umfassend mindestens ein Kommando (K) und eine Datensequenz (D), von der Basisstation (B) an den Transponder (T) übertragbar und durch den Transponder (T) empfangbar und auswertbar ist,
**dadurch gekennzeichnet, dass**
nach einem Empfang des Kommandos (K) und vor einem vollständigen Empfang des Telegramms durch den Transponder (T) mindestens ein Schlüssel bereitstellbar und an eine Basisstation (B) übertragbar ist, durch die Basisstation (B) der übertragene Schlüssel erkennbar und noch zu sendende Teile des Telegramms und/oder nachfolgende Telegramme mit dem Schlüssel kodierbar sind und
kodiert empfangene Teile des Telegramms durch den Transponder (T) dekodierbar sind.
